# EUROPEAN PATENT APPLICATION

(11) **EP 2 226 988 A1**
(43) Date of publication of application: **08.09.2010**
(21) Application number: 09154257.1
(22) Date of filing: 03.03.2009
(51) Int. Cl.: H04L 29/08, H04L 29/06

(54) **Method for accessing to local resources of a client terminal in a client/server architecture**

(71) Applicant: NEC Corporation, Minato-ku Tokyo 108-8001 (JP)
(72) Inventor: Calvez, Olivier, 94220, CHARENTON LE PONT (FR); Collet, Thibaut, 78000, VERSAILLES (FR); Perron, Olivier, 95130, FRANCONVILLE LA GARENNE (FR)
(74) Representative: Ilgart, Jean-Christophe

(57) **Abstract**

The invention relates to a method for accessing to local resources (8) of a client terminal (2) in a client/server architecture, the client terminal (2) comprising at least a local network proxy (10) and the server (4) comprising at least a Web application (14).
Said method comprises the following steps:
- defining dynamically a list of client requests allowed to access to the local resources (8) of the client terminal (2),
- storing said list in the local network proxy (10), and,
for each request from the client terminal (2) to the server (4),
- filtering said request in the local network proxy (10), and,
- routing the request to the local resources (8) to be accessed if said request is registered in said list, else, transmitting said request to the server (4).

## Description

### TECHNICAL DOMAIN

The invention pertains to telecommunication field and concerns a method for accessing to local resources of a client terminal in a client/server architecture, the client terminal comprising at least a local network proxy and the server comprising at least a Web application.

The invention also concerns a Client terminal connected to a server in a client/server architecture, and a local network proxy arranged in said client terminal for implementing the method according to the invention.

### STATE OF PRIOR ART

Access to the local resources of a terminal is governed by the "same origin policy" which is an important security concept for a number of browser-side interpreted languages, such as JavaScript. This policy permits scripts running on pages originating from the same site to access each other's methods and properties with no specific restrictions, but prevents access to most methods and properties across pages on different sites.

This mechanism bears a particular significance for modern web applications that extensively depend on HTTP cookies to maintain authenticated user sessions, as servers act based on the HTTP cookie information to reveal sensitive information or take state-changing actions. A strict separation between content provided by unrelated sites must be maintained on client side to prevent the loss of data confidentiality or integrity.

Access to local resources of a client terminal in a client/server architecture therefore faces the requirement of this rule.

Solutions of prior art for accessing to local resources of a client terminal generally use proxies or plug-ins.

Plug-in solutions are browser and language dependent, and proxy solutions are protocol dependent. This is a drawback for proxy solution based on HTTP protocol since they must deactivate cross domain protection in case of DHTML pages.

An object of the invention is a method for facilitating development and portability of web applications using local resources of a client terminal in a client/server architecture which is compliant with the "same origin policy" concept without deactivating the cross domain protection.

Another object of the invention is a method which is browser and protocol independent.

Yet another object of the invention is a method including a security mechanism to protect handset against malicious web application and that offers the possibility to the application server to manage local resources requests not supported locally by the client terminal or denied by the client terminal such as limited services and error managements.

### PRESENTATION OF THE INVENTION

The object of the invention is achieved by means of a method for accessing to local resources of a client terminal in a client/server architecture, the client terminal comprising at least a local network proxy and the server comprising at least a Web application.

The method according to the invention comprises the following steps:
- defining dynamically a list of client requests allowed to access to the local resources of the client terminal,
- storing said list in the local network proxy, and,
   for each request from the client terminal to the server,
- filtering said request in the local network proxy, and,
- routing the request to the local resources to be accessed if said request is registered in said list, else, transmitting said request to the server.

According to the invention, the filtering step consists in calculating in the local network proxy a hash value for each request and verifying whether the calculated hash value is previously registered in the local network proxy or not.

Said hash value is calculated in function of a specific parameter of the local resource to be accessed.

According to a preferred embodiment of the invention, said specific parameter is the URN (Uniform Resource Name) of said resource.

Preferably, the method according to the invention comprises a cache mechanism to:
- protect the client terminal against burst requests from poor coded web applications.
- improve performance of data access.

In the preferred embodiment of the invention, the method further comprises the steps of:
- testing whether the URN is local to the client terminal or not, and,
- if the URN is not local, transmitting said request to the server, else, accessing to the local resource associated to said URN.

Moreover, if the URN is local to the client terminal, said method further comprises the steps of:
- controlling the domain indicated by the URL,
- controlling the IP origin of the request,
- controlling the local IP interface which received the request.
- specific session parameters inside the request

And, if the URN is not local to the client terminal or client request is not authorized to access to the local resource, said request is transferred to the server via the local network proxy.

The method according to the invention further comprises the steps of:
- building and sending an answer to the client if a valid data is recorded inside the local cache, or,
- processing the request and returning the result to the client if the data does not exist, is obsolete, or if the URN relates a service not to a data.

The method according to the invention is implemented in a Client terminal connected to a server in a client/server architecture, said client terminal comprising at least a local network proxy, and said server comprising at least a Web application, wherein the local network proxy comprises:
- means for defining dynamically a list of client requests allowed to access to the local resources of the client terminal,
- means for storing said list,
- means for filtering each request from the client terminal to the server,
- means for routing the request registered in said list to the local resources to be accessed,
- means for transmitting the request not registered in said list to the server.

### BRIEF DESCRIPTION OF THE FIGURES

The forgoing summary, as well as the following detailed description, will be better understood when read in conjunction with the appended figures illustrating an exemplary embodiment of the invention in which:
- figure 1 is diagram showing the exchange of information between a client terminal and a distant server in a particular implementation of the invention using a local GPS application.
- figure 2, is a schematic diagram illustrating the method according to the invention.

### DESCRIPTION OF A DETAILED EMBODIMENT OF THE INVENTION

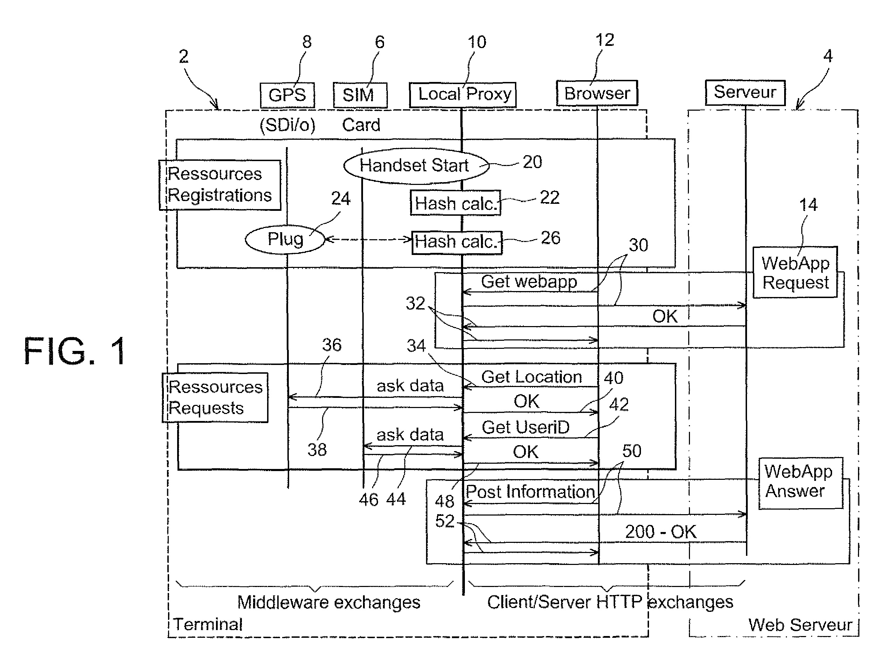

The invention will be described by reference to figures 1 to 2, illustrating the method according to the invention in which a UE 2 is connected to a distant server 4 in a client/server architecture. The UE 2 comprises a SIM card 6, a GPS module 8 (for Global Positioning System), a local proxy 10, and a browser 12. The server 4 comprises Web application (WebApp) 14.

Referring now to figure 1, at step 20, the UE 2 is switched and, at step 22, the URN of the GPS module is used for calculating a Hash.

At step 24, the GPS module is plugged to the UE 2.

At step 26, the local proxy 10 registers the hash calculated at step 22.

When the user puts the WebApp URL in the browser, a GET webapp request is transmitted at step 30 by the browser 12 to the WebApp 14 via the local proxy 10.

At step 32, the WebApp 14 sends an acknowledgement to the browser 12 and a page comprising a JavaScript is loaded in the UE 2, and the WebApp 14 requesting the position of the UE 2 is running in said UE 2.

At step 34, the browser 12 transmits to the server 4 a Get location request comprising the URN of the GPS module 8.

The Get location request is intercepted by the local proxy 10 which calculates the hash in function of the URN of the GPS module 8 to verify whether the request can be processed locally in the UE 2 or not.

The request can be processed locally in the UE 2 if the hash calculated is registered in the local proxy 10. In this case, at step 36, the local proxy 10 requests data from the GPS module 8, receives the requested data at step 38, and transmits said data to the browser 12 step 40.

At step 42, the browser 12 transmits to the server 4 a Get UserID request comprising the URN of the SIM Card 6.

The Get UserID request is intercepted by the local proxy 10 which calculates the hash in function of the URN of the SIM Card 6 to verify whether the request can be processed locally in the UE 2 or not.

The request can be processed locally in the UE 2 if the hash calculated is registered in the local proxy 10. In this case, at step 44, the local proxy 10 requests data from the SIM Card 6, receives the requested data at step 46, and transmits said data to the browser 12 step 48.

At step 50, the browser 12 transmits the information received from the GPS module 8 and from the SIM card 6 to the WebApp 14 via the proxy 10.

The example described above concerns the GPS resource of the UE 2, however, the method according to the invention can be implemented for accessing to any local resources of the UE 2 independently of:
- The Client (browser, widget, application with a standard interface as HTTP for example),
- The application program language (Flash, java, JavaScript, vb, ...)
- The protocol itself....The method according to the invention can be implemented with http protocol for web application and with any other protocols (ftp, telnet ...) since the application use URI mechanism to get local resources information.

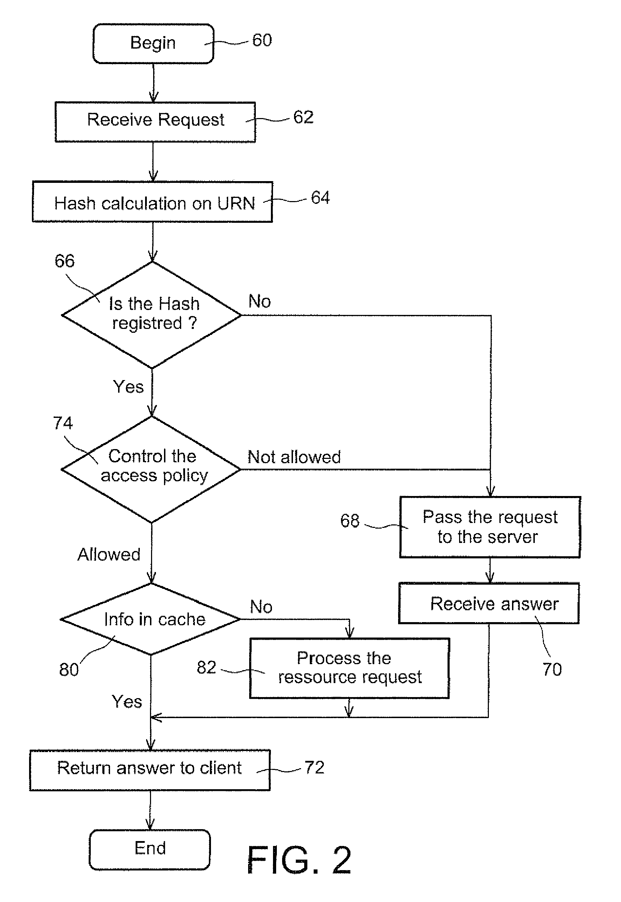

Figure 2 illustrates a general flow chart illustrating the mains steps of the invention.

At step 60, the client UE 2 is switched on.

At step 62, the local proxy 10 receives a request of resource from an internal or external application, and calculates, at step 64 a hash in function of the URN comprised in the request.

At step 66, the local proxy 10 filters said request by verifying whether the hash calculated at step 64 is previously registered in the local network proxy 10 or not.

If the hash calculated at step 64 is not registered, the local proxy 10 passes the request to the server 4 at step 68, receives the response from the servers 4 at step 70, and returns the response to the client at step 72.

Else, if the hash calculated at step 64 is registered, the local proxy 10 control the access policy at step 74 concerning the resource associated to the URN.

If the access to the resource is not allowed, the local proxy 10 passes the request to the server 4 at step 68 and the steps 70 to 72 are executed.

Else, if the access to the resource is allowed, at step 80, the local proxy 10 asks for data stored in a cache in the UE 2.

If valid data is recorded in the cache, the local proxy 10 builds a response to the request and sends said response to the UE 2 at step 72.

Else, if the data does not exist, or if it is obsolete or if the URN suits a service but not a data, the local proxy 10 process the request at step 82 and returns the result to the UE 2 at step 72.

## Claims

1. A method for accessing to local resources (8) of a client terminal (2) in a client/server architecture, the client terminal (2) comprising at least a local network proxy (10) and the server (4) comprising at least a Web application (14), said method **characterized by** the following steps:
- defining dynamically a list of client requests allowed to access to the local resources (8) of the client terminal (2),
- storing said list in the local network proxy (10), and,
for each request from the client terminal (2) to the server (4),
- filtering said request in the local network proxy (10), and,
- routing the request to the local resources (8) to be accessed if said request is registered in said list, else, transmitting said request to the server (4).

2. Method according to claim 1 wherein the filtering step consists in calculating in the local network proxy (10) a hash value for each request and verifying whether the calculated hash value is previously registered in the local network proxy (10) or not.

3. Method according to claim 2 wherein said hash value is calculated in function of a specific parameter of the local resource to be accessed.

4. Method according to claim 3 wherein said specific parameter is the URN of said resource.

5. Method according to claim 1 further comprising a cache mechanism to protect the client terminal (2) against burst requests from poor coded web applications and to improve data access performance.

6. Method according to claim 5 further comprising the steps of:
- testing if the URN is local to the client terminal (2) or not, and,
- if the URN is not local, transmitting said request to the server (4), else, accessing to the local resource (8) associated to said URN.

7. Method according to claim 6 wherein, if the URN is local to the client terminal (2), said method further comprises the steps of:
- controlling the domain indicated by the URL,
- controlling the IP origin of the request,
- controlling the local IP interface which received the request
- specific session parameters inside the request

8. Method according to claim 7 wherein, if the URN is local to the client terminal but the client request is not authorized to access to the local resource, said request is transferred to the server (4) via the local network proxy (10).

9. Method according to claim 7 further comprising:
- building and sending an answer to the client terminal (2) if a valid data is recorded inside the local cache, or,
- processing the request and returning the result to the client terminal (2) if the data does not exist, is obsolete, or if the URN relates a service not to a data.

10. Client terminal (2) connected to a server in a client/server architecture, said client terminal (2) comprising at least a local network proxy (10), and said server (4) comprising at least a Web application (14), **characterized in that** said local network proxy (10) comprises:
- means for defining dynamically a list of client requests allowed to access to a local resources (8) of the client terminal (2),
- means for storing said list,
- means for filtering each request from the client terminal (2) to the server (4),
- means for routing the request registered in said list to the local resources to be accessed,
- means for transmitting the request not registered in said list to the server (4).

11. local network proxy (4) arranged in a client terminal (2) in client/server architecture, **characterized in that** it comprises:
- means for defining dynamically a list of client requests allowed to access to the local resources of the client terminal,
- means for storing said list,
- means for filtering each request from the client terminal (2) to the server (4),
- means for routing the request registered in said list to the local resources to be accessed,
- means for transmitting the request not registered in said list to the server (2).
